(19) Europäisches Patentamt

European Patent Office

Office européen des brevets

(11) **EP 3 396 000 A1**

(12) **EUROPEAN PATENT APPLICATION**
published in accordance with Art. 153(4) EPC

(43) Date of publication:
**31.10.2018 Bulletin 2018/44**

(21) Application number: **16879328.9**

(22) Date of filing: **21.12.2016**

(51) Int Cl.:
*C22C 38/58* [(2006.01)]    *C22C 38/42* [(2006.01)]
*C22C 38/02* [(2006.01)]    *C22C 38/00* [(2006.01)]
*F16L 9/02* [(2006.01)]

(86) International application number:
**PCT/KR2016/015015**

(87) International publication number:
**WO 2017/111461 (29.06.2017 Gazette 2017/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **23.12.2015 KR 20150184675**

(71) Applicant: **POSCO**
**Pohang-si, Gyeongsangbuk-do 37859 (KR)**

(72) Inventors:
• **KANG, Hyung Gu**
**Pohang-si**
**Gyeongsangbuk-do 37680 (KR)**

• **KIM, Sang Seok**
**Seoul 05823 (KR)**
• **JEON, Jong Jin**
**Pohang-si**
**Gyeongsangbuk-do 37656 (KR)**
• **SONG, Byoung Jun**
**Pohang-si**
**Gyeongsangbuk-do 37667 (KR)**
• **JUNG, Han Yong**
**Incheon 21982 (KR)**

(74) Representative: **Potter Clarkson LLP**
**The Belgrave Centre**
**Talbot Street**
**Nottingham NG1 5GG (GB)**

(54) **AUSTENITIC STAINLESS STEEL PIPE EXHIBITING EXCELLENT WRINKLE RESISTANCE**

(57)    Disclosed is an austenitic stainless steel pipe having excellent wrinkle resistance. The austenitic stainless steel pipe includes, based on % by weight, silicon (Si): 0.1 to 0.65 %, manganese (Mn): 0.2 to 3.0 %, nickel (Ni): 6.5 to 12.0 %, chromium (Cr): 14.5 to 20.5 %, copper (Cu): 6.0 % or less (excluding 0), the sum of carbon (C) and nitrogen (N): 0.13 % or less (excluding 0), and the remainder being Fe and unavoidable impurities, wherein the austenitic stainless steel pipe satisfies Equation (1) below concerning an outer diameter (D) and a thickness (t) thereof and has a yield strength of 195 MPa or less:

$$D/t \geq 20 \ \ldots\ldots \ \text{Equation (1)}. \qquad \text{Equation (1)}.$$

【FIG. 2】

**Description**

[Technical Field]

The present invention relates to an austenitic stainless steel pipe having excellent wrinkle resistance, and more particularly to an austenitic stainless steel pipe which is easily bent by the force of a person and a bent portion of which is not wrinkled upon bending work.

[Background Art]

Conventionally, there have been attempts to apply stainless steel to refrigerant pipes of air conditioners for domestic use and automobiles because not only it has corrosion resistance superior to other materials but also is relatively cheap.

However, since installation space is limited upon installation of refrigerant pipes of air conditioners, the refrigerant pipes are essentially bent by the force of a person in many cases. In these cases, conventional copper pipes or aluminum pipes do not pose any problems due to sufficient ductility thereof, but general stainless steels do not have flexibility essentially required upon pipe installation.

Metal materials have a characteristic of being work-hardened when deformed by tension, compression, or the like, and being further hardened as they are deformed. Pipes are bent due to a complex action including tension and compression. Materials become harder as they are bent. In particular, since 304 steel, which is the most widely used austenitic stainless steel, exhibits severe work hardening, it is very difficult to bend a pipe made of 304 steel by the force of a person in a space where the pipe is installed.

In addition, austenitic stainless steel has a problem that a shape change, such as wrinkles, occurs upon bending-working of a pipe made thereof. Such wrinkles are not aesthetically pleasing, and thus, should be removed. When the wrinkles are removed by polishing, additional costs and time are disadvantageously consumed.

[Related Art Document]

[Patent Document]

Japanese Patent Application Publication No. 10-2003-268503

[Disclosure]

[Technical Problem]

Embodiments of the present invention provide an austenitic stainless steel pipe which is easily bent by the force of a person and a bent portion of which is not wrinkled upon bending work.

[Technical Solution]

In accordance with an aspect of the present invention, the above and other objects can be accomplished by the provision of an austenitic stainless steel pipe having excellent wrinkle resistance including, based on % by weight, silicon (Si): 0.1 to 0.65 %, manganese (Mn): 0.2 to 3.0 %, nickel (Ni): 6.5 to 12.0 %, chromium (Cr): 14.5 to 20.5 %, copper (Cu): 6.0 % or less (excluding 0), the sum of carbon (C) and nitrogen (N): 0.13 % or less (excluding 0), and the remainder being Fe and unavoidable impurities, wherein the austenitic stainless steel pipe satisfies Equation (1) below concerning an outer diameter (D) and a thickness (t) thereof and has a yield strength of 195 MPa or less:

$$D/t \geq 20 \ \ldots\ldots \text{ Equation (1).}$$

In accordance with an embodiment of the present invention, the austenitic stainless steel pipe may have an ASTM grain size number of 8 or less.

In accordance with an embodiment of the present invention, the steel pipe may have a ferritic or martensitic phase fraction of less than 1 %.

[Advantageous Effects]

Embodiments of the present invention provide a steel pipe manufactured using an austenitic stainless steel. The stainless pipe according to the present invention can substitute for conventional copper pipes or aluminum pipes which have been used for refrigerant pipes of air conditioners for domestic use and automobiles. In addition, the stainless pipe can exhibit superior corrosion resistance and can lower material costs, compared to conventional pipes. Further, since morphological problems, such as wrinkles, upon bending-working of the pipe are not exhibited, the pipe can be easily bending-worked, without great difficulty, by the force of a person.

[Description of Drawings]

FIG. 1 illustrates a photograph of a conventional austenitic stainless steel pipe bent at 90°.

FIG. 2 illustrates a photograph of an austenitic stainless steel pipe according to an embodiment of the present invention bent at 90°.

FIG. 3 is a graph illustrating a correlation between a ratio of an outer diameter (D) to a thickness (t) of an austenitic stainless steel pipe according to an embodiment of the present invention and a yield strength thereof.

FIG. 4 is a graph illustrating a correlation between a yield strength of an austenitic stainless steel pipe according to an embodiment of the present invention and a particle size thereof.

[Best Mode for Carrying Out the Invention]

An austenitic stainless steel pipe having excellent wrinkle resistance according to an embodiment of the present invention includes, based on % by weight, silicon (Si): 0.1 to 0.65 %, manganese (Mn): 0.2 to 3.0 %, nickel (Ni): 6.5 to 12.0 %, chromium (Cr): 14.5 to 20.5 %, copper (Cu): 6.0 % or less (excluding 0), the sum of carbon (C) and nitrogen (N): 0.13 % or less (excluding 0), and the remainder being Fe and unavoidable impurities, wherein the austenitic stainless steel pipe satisfies Equation (1) below concerning an outer diameter (D) and a thickness (t) thereof and has a yield strength of 195 MPa or less:

$$D/t \geq 20 \ \ldots\ldots \ \text{Equation (1)}.$$

[Mode for Carrying Out the Invention]

Hereinafter, embodiments of the present invention will be described in detail with reference to the accompanying drawings. The following embodiments are provided to fully convey the spirit of the present invention to a person having ordinary skill in the art to which the present invention belongs. The present invention is not limited to the embodiments shown herein but may be embodied in other forms. For the sake of clarity of the present invention, portions, which are unrelated to the present invention, are omitted, and the sizes of components may be slightly exaggerated to help understanding of the present invention.

An austenitic stainless steel pipe having excellent wrinkle resistance according to an embodiment of the present invention includes, based on % by weight, silicon (Si): 0.1 to 0.65 %, manganese (Mn): 0.2 to 3.0 %, nickel (Ni): 6.5 to 12.0 %, chromium (Cr): 14.5 to 20.5 %, copper (Cu): 6.0 % or less (excluding 0), the sum of carbon (C) and nitrogen (N): 0.13 % or less (excluding 0), and the remainder being Fe and unavoidable impurities.

Hereinafter, grounds for numerical limitations of ingredients constituting the austenitic stainless steel pipe having excellent wrinkle resistance of the present invention are described.

Silicon (Si) is added in an amount range of 0.1 to 0.65 % by weight.

Si is an element essentially added for deoxidation. When the content of Si is too low, the cost of a steelmaking process is high. Accordingly, the content of Si is limited to 0.1 % or more.

However, when the content of Si is too high, since Si is a solid solution strengthening element, strength is increased to harden a material and accordingly, it is not easy to accomplish a yield strength of 195 MPa or less proposed in the present invention. In addition, Si combines with oxygen to form an inclusion, whereby corrosion resistance is decreased. Accordingly, an upper limit of Si is limited to 0.65 %.

Manganese (Mn) is added in an amount range of 0.2 to 3.0 % by weight.

Mn, which is essentially added for deoxidation, increases the stability of an austenitic phase, and reduces a generation amount of ferrite or martensite in a steel pipe, is added in an amount of 0.2 % or more to maintain austenite balance.

However, when Mn, as a solid solution strengthening element, is added in too high a content, the strength of a steel pipe may increase. Accordingly, it is not easy to accomplish a yield strength of 195 MPa or less proposed in the present invention. In addition, since the corrosion resistance of a material may be decreased, an upper limit of Mn is limited to 3.0 %.

Nickel (Ni) is added in an amount range of 6.5 to 12.0 % by weight.

When Ni is added along with chromium (Cr), corrosion resistance, such as pitting corrosion resistance, may be effectively improved. In addition, when the content of Ni increases, softening of an austenite steel may be accomplished. In addition, Ni, which increases the stability of an austenitic phase and reduces a ferrite or martensite generation amount in a steel pipe, is added in an amount of 6.5 % or more so as to maintain austenite balance.

However, when the content of Ni is excessively high, the cost of steel increases. Accordingly, an upper limit of Ni is limited to 12.0 %.

Chromium (Cr) is added in an amount range of 14.5 to 20.5 % by weight.

Cr, which is an essential element in increasing the corrosion resistance of stainless steel, should be added in an amount of 14.5 % or more for general purposes.

However, when Cr, as a solid solution strengthening element, is added in too high a content, the strength of a steel pipe may increase, and thus, it is not easy to accomplish a yield strength of 195 MPa or less proposed in the present invention. In addition, costs increase. Accordingly, an upper limit of Cr is limited to 20.5 %.

Copper (Cu) is added in an amount range of 6.0 % by weight or less (excluding 0).

Since Cu may cause softening of an austenite steel and reduces a ferrite or martensite generation amount in a steel pipe, it is preferred to add the same.

However, when Cu is added in too high a content, hot workability may be decreased, an austenitic phase may be rather hardened, costs may increase, and manufacturing difficulties may increase. Accordingly, an upper limit of Cu is limited to 6.0 %.

The sum of carbon (C) and nitrogen (N) should be added in an amount of 0.13 % by weight or less (excluding 0).

C and N, which are interstitial solid solution strengthening elements, harden austenitic stainless steel. When the content of C and N is high, a modified organic martensite generated during processing is hardened, whereby a work hardening degree of a material increases.

Accordingly, the content of C and N should be limited. In the present invention, the content of the sum of C and N is limited to 0.13 % or less.

The austenitic stainless steel pipe having excellent wrinkle resistance according to an embodiment of the present invention satisfies Equation (1) below concerning an outer diameter (D) and a thickness (t) thereof:

$$D/t \geq 20 \ldots\ldots \text{Equation (1)}$$

When a ratio of an outer diameter (D) of the steel pipe to a thickness (t) thereof, i.e., D/t ratio, is less than 20, the steel pipe may be easily bending-worked by anyone without the occurrence of wrinkles.

However, when a ratio of an outer diameter (D) of the steel pipe to a thickness (t) thereof, i.e., D/t ratio, is 20 or more, the steel pipe may exhibit wrinkles upon bending work. Accordingly, working is not easy.

However, when a ratio of an outer diameter (D) of the steel pipe to a thickness (t) thereof, i.e., D/t ratio, is 20 or more and the steel pipe has a yield strength of 195 MPa or less as proposed in the present invention, the steel pipe may be easily bending-worked without wrinkles.

The stainless steel pipe has a yield strength of 195 MPa or less.

When a ratio of an outer diameter (D) of the steel pipe to a thickness (t) thereof, i.e., D/t ratio, is less than 20, the steel pipe may be easily bending worked, without the occurrence of wrinkles, by anyone regardless of the yield strength of the stainless steel pipe.

When a ratio of an outer diameter (D) of the steel pipe to a thickness (t) thereof, i.e., D/t ratio, is 20 or more and the stainless steel pipe has a yield strength of greater than 195 MPa, the strength of the steel pipe is excessive. Accordingly, it is difficult to bending-work the steel pipe by the force of a person, and wrinkles may occur upon bending-working thereof.

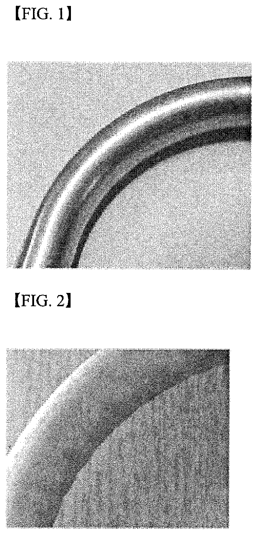

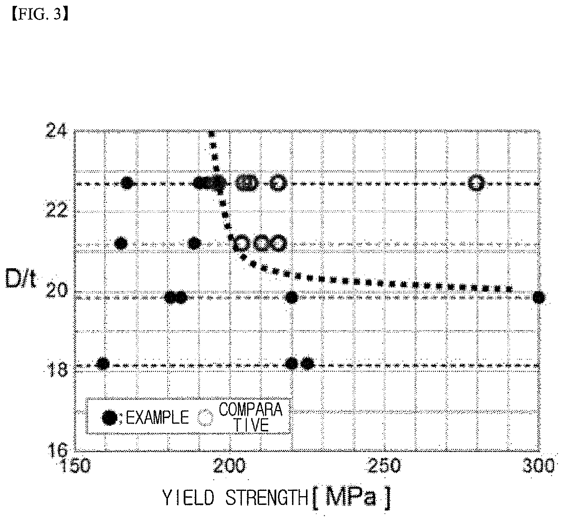

FIG. 1 illustrates a photograph of a conventional austenitic stainless steel pipe bent at 90°. FIG. 2 illustrates a photograph of an austenitic stainless steel pipe according to an embodiment of the present invention bent at 90°. FIG. 3 is a graph illustrating a correlation between a ratio of an outer diameter (D) to a thickness (t) of an austenitic stainless steel pipe according to an embodiment of the present invention and a yield strength thereof.

The austenitic stainless steel illustrated in FIG. 2 satisfies a ratio of an outer diameter (D) of the steel pipe of the present invention to a thickness (t) thereof, and a yield strength of the present invention. From FIG. 2, it can be confirmed that the austenitic stainless steel is not wrinkled upon bending-working thereof.

FIG. 3 illustrates whether a steel pipe manufactured using a steel pipe having ingredients proposed in the present invention is wrinkled upon bending work, depending upon a ratio of an outer diameter (D) of the steel pipe to a thickness (t) thereof, i.e., D/t, and a yield strength of the steel pipe. Black circles represent examples of the present invention in which steel pipes are not wrinkled upon bending work. White circles represent cases wherein steel pipes not according to the examples of the present invention are wrinkled upon bending work.

It can be confirmed that, in a range wherein a ratio of an outer diameter (D) of each of the steel pipes to a thickness (t) thereof, i.e., D/t, is less than 20, the steel pipes are not wrinkled regardless of the yield strengths thereof.

On the other hand, it can be confirmed that, in a range where a ratio of an outer diameter (D) of each of the steel pipes to a thickness (t) thereof, i.e., D/t, is 20 or more, non-wrinkled steel pipes may be obtained only when the steel pipes have a yield strength 195 MPa or less, as proposed in the present invention. Although the yield strengths of the pipes were measured according to ASTM_A370, other methods may be also used.

For example, the stainless steel pipe may have an ASTM grain size number of 8 or less. The grain size is measured at a longitudinal cross section of the stainless steel pipe.

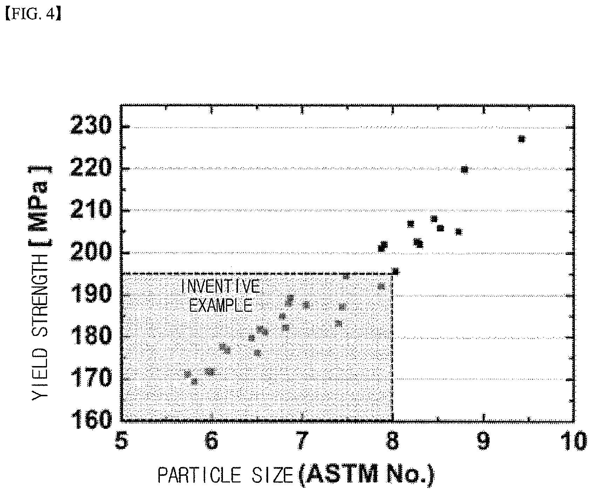

FIG. 4 is a graph illustrating a correlation between a yield strength of an austenitic stainless steel pipe according to an embodiment of the present invention and a particle size thereof.

FIG. 4 illustrates that austenitic stainless steel pipes having a yield strength of 195 MPa or less in the grain size range proposed in the present invention may be satisfactorily manufactured. Referring to FIG. 4, it can be confirmed that the yield strength of a steel pipe is decreased as a grain size is decreased.

Accordingly, it is preferred to control a grain size to 8 or less so as to satisfy the yield strength of 195 MPa or less of the present invention.

For example, the steel pipe may have a ferritic phase fraction of less than 1 %, and a martensitic phase fraction of less than 1 %.

The steel pipe has a ferrite or martensite fraction of less than 1 %, as measured by a magnetization method.

Hereinafter, the present invention will be described in detail by describing exemplary embodiments of the invention.

Examples

An austenitic stainless steel slab including ingredients of each of Inventive Examples 1 to 19 and Comparative Examples 1 to 11 as summarized in Table 1 below was manufactured through continuous casting. Subsequently, the austenitic stainless steel slab was subjected to hot rolling, and cold rolling into a total reduction ratio of 50 %, thereby manufacturing a cold-rolled steel sheet. A steel pipe was manufactured using the resultant cold-rolled steel sheet.

Subsequently, properties, such as particle size and yield strength, of the steel pipe were measured. The steel pipe was bent at 90°, and then the occurrence of wrinkles was observed with the naked eye.

[Table 1]

|  | Ingredients | | | | | | |
|---|---|---|---|---|---|---|---|
|  | C | Si | Mn | Ni | Cr | Cu | N |
| Inventive Example 1 | 0.012 | 0.3 | 0.7 | 7.8 | 16.9 | 3.01 | 0.008 |
| Inventive Example 2 | 0.010 | 0.3 | 1.2 | 9.6 | 16.8 | 0.00 | 0.010 |
| Inventive Example 3 | 0.010 | 0.3 | 1.2 | 8.7 | 16.9 | 3.00 | 0.010 |
| Inventive Example 4 | 0.010 | 0.3 | 1.2 | 9.6 | 16.9 | 2.98 | 0.010 |
| Inventive Example 5 | 0.009 | 0.6 | 1.2 | 7.5 | 17.0 | 2.98 | 0.010 |
| Inventive Example 6 | 0.010 | 0.3 | 1.8 | 7.6 | 16.8 | 3.00 | 0.010 |
| Inventive Example 7 | 0.010 | 0.3 | 1.1 | 7.6 | 17.2 | 3.03 | 0.010 |
| Inventive Example 8 | 0.010 | 0.3 | 2.2 | 7.6 | 16.9 | 3.00 | 0.010 |
| Inventive Example 9 | 0.012 | 0.3 | 0.7 | 7.8 | 16.9 | 3.01 | 0.008 |

(continued)

| | Ingredients | | | | | | |
|---|---|---|---|---|---|---|---|
| | C | Si | Mn | Ni | Cr | Cu | N |
| Inventive Example 10 | 0.010 | 0.3 | 1.2 | 9.6 | 16.8 | 0.00 | 0.010 |
| Inventive Example 11 | 0.010 | 0.3 | 1.2 | 9.6 | 16.9 | 2.98 | 0.010 |
| Inventive Example 12 | 0.009 | 0.6 | 1.2 | 7.5 | 17.0 | 2.98 | 0.010 |
| Inventive Example 13 | 0.010 | 0.3 | 1.2 | 8.7 | 16.9 | 3.00 | 0.010 |
| Inventive Example 14 | 0.010 | 0.3 | 1.2 | 9.6 | 19.0 | 0.00 | 0.010 |
| Inventive Example 15 | 0.010 | 0.3 | 2.2 | 7.6 | 16.9 | 3.00 | 0.010 |
| Inventive Example 16 | 0.010 | 0.3 | 1.8 | 7.6 | 16.8 | 3.00 | 0.010 |
| Inventive Example 17 | 0.010 | 0.3 | 1.1 | 7.6 | 17.2 | 3.03 | 0.010 |
| Inventive Example 18 | 0.010 | 0.3 | 1.2 | 9.6 | 19.0 | 2.90 | 0.010 |
| Inventive Example 19 | 0.010 | 0.3 | 1.2 | 9.6 | 16.8 | 0.00 | 0.010 |
| Comparative Example 1 | 0.012 | 0.3 | 0.7 | 7.8 | 16.9 | 3.01 | 0.008 |
| Comparative Example 2 | 0.010 | 0.3 | 1.2 | 9.6 | 19.0 | 0.00 | 0.010 |
| Comparative Example 3 | 0.010 | 0.3 | 1.2 | 9.6 | 16.9 | 2.98 | 0.010 |
| Comparative Example 4 | 0.010 | 0.3 | 1.2 | 8.7 | 16.9 | 3.00 | 0.010 |
| Comparative Example 5 | 0.010 | 0.3 | 1.8 | 7.6 | 16.8 | 3.00 | 0.010 |
| Comparative Example 6 | 0.009 | 0.6 | 1.2 | 7.5 | 17.0 | 2.98 | 0.010 |
| Comparative Example 7 | 0.010 | 0.3 | 1.2 | 9.6 | 19.0 | 2.90 | 0.010 |
| Comparative Example 8 | 0.010 | 0.3 | 2.2 | 7.6 | 16.9 | 3.00 | 0.010 |
| Comparative Example 9 | 0.010 | 0.3 | 1.1 | 7.6 | 17.2 | 3.03 | 0.010 |
| Comparative Example 10 | 0.010 | 0.3 | 1.2 | 9.6 | 19.0 | 0.00 | 0.010 |
| Comparative Example 11 | 0.010 | 0.3 | 1.2 | 9.6 | 19.0 | 2.90 | 0.010 |

[Table 2]

| | Particle size (ASTM) | Yield strength (MPa) |
|---|---|---|
| Inventive Example 1 | 5.8 | 169 |
| Inventive Example 2 | 5.7 | 171 |
| Inventive Example 3 | 6.0 | 172 |
| Inventive Example 4 | 6.0 | 172 |
| Inventive Example 5 | 6.5 | 176 |
| Inventive Example 6 | 6.2 | 177 |
| Inventive Example 7 | 6.1 | 178 |
| Inventive Example 8 | 6.4 | 180 |
| Inventive Example 9 | 6.6 | 181 |
| Inventive Example 10 | 6.5 | 182 |
| Inventive Example 11 | 6.8 | 182 |
| Inventive Example 12 | 7.4 | 183 |

(continued)

| | Particle size (ASTM) | Yield strength (MPa) |
|---|---|---|
| Inventive Example 13 | 6.8 | 185 |
| Inventive Example 14 | 7.4 | 187 |
| Inventive Example 15 | 7.0 | 188 |
| Inventive Example 16 | 6.8 | 188 |
| Inventive Example 17 | 6.9 | 189 |
| Inventive Example 18 | 7.9 | 192 |
| Inventive Example 19 | 7.5 | 195 |
| Comparative Example 1 | 8.0 | 196 |
| Comparative Example 2 | 7.9 | 201 |
| Comparative Example 3 | 7.9 | 202 |
| Comparative Example 4 | 8.3 | 202 |
| Comparative Example 5 | 8.3 | 203 |
| Comparative Example 6 | 8.7 | 205 |
| Comparative Example 7 | 8.5 | 206 |
| Comparative Example 8 | 8.2 | 207 |
| Comparative Example 9 | 8.5 | 208 |
| Comparative Example 10 | 8.8 | 220 |
| Comparative Example 11 | 9.4 | 227 |

Referring to the Tables 1 and 2 and FIGS. 3 and 4, the roles of the ingredients and the particle size range proposed in the present invention can be understood. That is, when the grain size and the yield strength are not within the ranges of the present invention although the composition of the present invention is satisfied, a steel pipe may be wrinkled upon bending work.

FIG. 4 illustrates that a steel pipe may be satisfactorily manufactured to have a yield strength of 195 MPa or less in the grain size range proposed in the present invention. Referring to FIG. 4, it can be confirmed that the yield strength of a steel pipe tends to decrease as a grain size is decreased.

While the present invention has been described with reference to exemplary embodiments, it is to be understood that the invention is not limited thereto. Those skilled in the art will understand that various changes and modifications may be made within the spirit and scope of the appended claims.

[Industrial Applicability]

Austenitic stainless steel according to embodiments of the present invention has industrial applicability in that it is applicable to refrigerant pipes of air conditioners for domestic use and automobile, etc.

**Claims**

1.  An austenitic stainless steel pipe having excellent wrinkle resistance, comprising, based on % by weight, silicon (Si): 0.1 to 0.65 %, manganese (Mn): 0.2 to 3.0 %, nickel (Ni): 6.5 to 12.0 %, chromium (Cr): 14.5 to 20.5 %, copper (Cu): 6.0 % or less (excluding 0), the sum of carbon (C) and nitrogen (N): 0.13 % or less (excluding 0), and the remainder being Fe and unavoidable impurities, wherein the austenitic stainless steel pipe satisfies Equation (1) below concerning an outer diameter (D) and a thickness (t) thereof and has a yield strength of 195 MPa or less:

$$D/t \geq 20 \ \ldots\ldots\ \text{Equation (1)}.$$

**2.** The austenitic stainless steel pipe according to claim 1, wherein the austenitic stainless steel pipe has an ASTM grain size number of 8 or less.

**3.** The austenitic stainless steel pipe according to claim 1, wherein the austenitic stainless steel pipe has a ferritic or martensitic phase fraction of less than 1 %.

【FIG. 1】

【FIG. 2】

【FIG. 3】

【FIG. 4】

## INTERNATIONAL SEARCH REPORT

International application No.

**PCT/KR2016/015015**

| A. | CLASSIFICATION OF SUBJECT MATTER |
|---|---|

*C22C 38/58(2006.01)i, C22C 38/42(2006.01)i, C22C 38/02(2006.01)i, C22C 38/00(2006.01)i, F16L 9/02(2006.01)i*

According to International Patent Classification (IPC) or to both national classification and IPC

| B. | FIELDS SEARCHED |
|---|---|

Minimum documentation searched (classification system followed by classification symbols)
C22C 38/58; C22C 38/00; B21C 37/08; C22C 38/18; C22C 38/42; C22C 38/02; F16L 9/02

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: wrinkle resistance, flexible, austenite-based, stainless, steel tube, coolant pipe, outer diameter, thickness, grain size and recovered strength

| C. | DOCUMENTS CONSIDERED TO BE RELEVANT | |
|---|---|---|

| Category* | Citation of document, with indication, where appropriate, of the relevant passages | Relevant to claim No. |
|---|---|---|
| X | JP 2015-137420 A (NIPPON STEEL & SUMITOMO METAL) 30 July 2015<br>See paragraph [0066], claim 1 and table 2. | 1-3 |
| A | KR 10-1550738 B1 (SUNG, Ki Cheon) 08 September 2015<br>See claims 1-8. | 1-3 |
| A | JP 05448023 B2 (NATIONAL INSTITUTE FOR MATERIALS SCIENCE) 19 March 2014<br>See claims 1-2. | 1-3 |
| A | JP 2008-169423 A (NISSHIN STEEL CO., LTD.) 24 July 2008<br>See claims 1-2. | 1-3 |
| A | JP 2000-297354 A (SANYO SPECIAL STEEL CO., LTD.) 24 October 2000<br>See paragraph [0013] and claim 1. | 1-3 |

☐ Further documents are listed in the continuation of Box C.     ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 MARCH 2017 (13.03.2017) | **27 MARCH 2017 (27.03.2017)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (January 2015)

INTERNATIONAL SEARCH REPORT
Information on patent family members

International application No.

**PCT/KR2016/015015**

| Patent document cited in search report | Publication date | Patent family member | Publication date |
|---|---|---|---|
| JP 2015-137420 A | 30/07/2015 | NONE | |
| KR 10-1550738 B1 | 08/09/2015 | NONE | |
| JP 05448023 B2 | 19/03/2014 | JP 2009-191296 A | 27/08/2009 |
| JP 2008-169423 A | 24/07/2008 | NONE | |
| JP 2000-297354 A | 24/10/2000 | NONE | |

Form PCT/ISA/210 (patent family annex) (January 2015)

**EP 3 396 000 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 102003268503 B